(19) Europäisches Patentamt / European Patent Office / Office européen des brevets

(11) **EP 2 025 250 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(51) Int Cl.:
*A23L 2/52* (2006.01)       *A23L 2/385* (2006.01)
*A23L 1/22* (2006.01)

(21) Anmeldenummer: **07113524.8**

(22) Anmeldetag: **31.07.2007**

(54) **Aufrahmstabile Getränkesirupe**

Creaming-resistant drink syrups

Sirop à boire résistant au crémage

(84) Benannte Vertragsstaaten:
**DE FR GB**

(43) Veröffentlichungstag der Anmeldung:
**18.02.2009 Patentblatt 2009/08**

(73) Patentinhaber: **Symrise AG**
**37603 Holzminden (DE)**

(72) Erfinder: **Dirk Schrader**
**37603 Holzminden (DE)**

(74) Vertreter: **Eisenführ, Speiser & Partner**
**Postfach 10 60 78**
**28060 Bremen (DE)**

(56) Entgegenhaltungen:
**EP-A- 0 358 444        EP-A- 1 149 845**
**EP-A- 1 151 677        EP-A- 1 759 598**
**EP-A- 1 787 533        WO-A-02/43509**
**WO-A-2005/048744**

- TEA A.M.: "Comparison of he emulsification properties of gum arabic and modified starch" SCI LECTURES PAPER SERIES, Bd. 0089, Nr. i, 1997, Seiten 1-4, XP008087595
- TAHERIAN ET AL.: "Effect of added oil and modified starch on rheological properties, droplet size distribution, opacity and stability of beverage cloud emulsions" JOURNAL OF FOOD ENGINEERING, Bd. 77, Nr. 3, 2006, Seiten 687-696, XP002465312
- DATABASE CAPLUS [Online] CHEMICAL ABSTRACTS SERVICE, COLUMBUS, OHIO, US; XP002465313 gefunden im STN Database accession no. 2005:514270

**Beschreibung**

Die vorliegende Erfindung betrifft das Gebiet der zum Verzehr geeigneten Getränke, insbesondere aufrahmstabile Getränkesirupe und Emulsionen zur Herstellung solcher Sirupe sowie ein Verfahren zu deren Herstellung.

Getränke mit einem trüben Erscheinungsbild sind grundsätzlich bekannt. So wird bei Erfrischungsgetränken die Trübung durch Dispergieren von Aromaöl oder einer zur Trübung geeigneten, nicht-wassermischbaren Flüssigkeit wie beispielsweise einem Speiseöl erreicht. Dieses System feinstverteilter Öltröpfchen in Wasser wird als Emulsion bezeichnet.

Typischerweise wird die Trübung durch Verwendung einer Emulsion oder eines eine Emulsion enthaltenen Getränkekonzentrats (Getränkesirup) bei der Herstellung des Getränkes eingebracht. Liegt die Emulsion als monodisperses Partikelkollektiv in geeigneter Verdünnung vor, so kann die Trübung als Lichtschwächung durch Streuung analog zum Lambert-Beer-Gesetz angegeben werden:

$$\ln (T) = \ln (I/I_o) = \tau * L$$

Dabei ist $\tau$ die Trübung der Emulsion, L die optisch durchstrahlte Länge der Probe, in [m], $I_o$ die Intensität des eingestrahlten Lichtes in [W/m$^2$], I die Intensität des Lichtes in [W/ m$^2$] nach Durchstrahlung der Schichtdicke L und T die Transmission der Probe. Die Trübung stellt das Verhältnis aus Streuleistung der Probe pro Volumeneinheit und Intensität des Primärstrahls dar. Die Trübung wird in verdünnter Lösung bestimmt. Hierbei gilt für die Trübung $\tau = \sigma_s * \rho$, wobei $\rho$ ist Teilchenzahldichte in [l/m$^3$] und $\sigma_s$ der Streulichtquerschnitt in [m$^2$] ist, definiert als das Verhältnis der gesamten Streulichtleistung eines Teilchens zur Intensität des Primärstrahls.

Die Streulichtleistung eines Teilchens ist dabei vor allem abhängig von dem Partikeldurchmesser, dem Brechungsindex der dispersen und kontinuierlichen Phase und der Wellenlänge des eingestrahlten Lichtes.

Die spezifische Trübung $\tau_c$ ist als Quotient aus Trübung $\tau$ und Konzentration C der dispersen Phase in [kg pro m$^3$ Dispersion] definiert: $\tau_c = \tau / C$.

Ist die Differenz der Brechungsindizes zwischen disperser und kontinuierlicher Phase bei sonst identischem Partikeldurchmesser groß, so ist auch die Trübung deutlich höher als bei Systemen mit geringem Unterschied in den Brechungsindizes. Ist der Brechungsindex der kontinuierlichen und dispersen Phase gleich, so erscheint das gesamte System klar.

Üblicherweise nimmt für Partikel, die kleiner als 0,5 bis 1 $\mu$m (abhängig von der Messmethode: Photometer, Nephelometer, Laserdiffraktion) sind, bei Verringerung der Teilchendurchmesser bei konstanter Volumenkonzentration der dispersen Phase die Trübung oder die spezifische Trübung ab. Somit muss bei Herstellung von Emulsionen mit kleiner werdenden Öltröpfchengröße für Emulsionen unter 0,5 bis 1 $\mu$m Tröpfchengröße eine immer höhere Volumenkonzentration der dispersen Phase eingestellt werden, um in dem Endgetränk den gleichen Trübungseindruck bzw. das gleiche optische Erscheinungsbild, verglichen mit einem trüben Saftgetränk, zu erreichen.

Liegen hauptsächlich Teilchengrößen von 0,15 bis 0,3 $\mu$m vor, so weist ein Getränk mit einer Trübungsstärke, die der eines trüben Saftes entspricht, ein abweichendes optisches Erscheinungsbild verglichen mit dem eines trüben Saftes auf, bei dem hauptsächlich Teilchen mit einer Partikelgröße größer 0,3 $\mu$m vorliegen.

Eine Emulsion ist im thermodynamischen Sinne ein instabiles System, das das Bestreben hat, in den energieärmsten Zustand eines 2-Phasen-Systems zurückzukehren. Physikalische Vorgänge, die diese Zerstörung der Emulsion beschreiben, sind Aufrahmung, Sedimentation, Flocculation und Koaleszenz von Öltröpfchen. Die genannten Vorgänge können dabei zeitlich überlagert ablaufen, wobei üblicherweise die Flocculation und Koaleszenz der Aufrahmung zeitlich vorausgeht.

Von ausreichender physikalischer Stabilität der Emulsion wird gesprochen, wenn innerhalb der geforderten Haltbarkeit des Lebensmittels keine Entmischung des dispersen Systems beobachtbar ist. Liegt ein System mit ungenügender physikalischer Stabilität vor, so wird bei einer - verglichen mit der wässrigen Phase - geringeren Öldichte eine Aufrahmung und Ölringbildung am Flaschenhals beobachtet. Liegt eine höhere Öldichte vor, so wird bei ungenügender physikalischer Stabilität eine Sedimentation am Boden der Flasche beobachtet.

Faktoren, die die physikalische Stabilität der Emulsion im Endgetränk (RTD = ready-to-drink) bzw. Getränkesirup bestimmen, sind die Dichtedifferenz zwischen kontinuierlicher und disperser Phase, der Phasengehalt der dispersen Phase im Endgetränk bzw. Getränkesirup und die Partikelgröße der dispersen Phase. Je größer die Dichtedifferenz und die Partikelgröße der dispersen Phase, desto schneller erfolgt eine Aufrahmung bzw. Phasentrennung.

Üblicherweise werden mit den gesetzlich zugelassenen Beschwerungsmitteln, wie SAIB (Saccharoseacetat-Isobutyrat, E 444), Estergum (E 445), sowie den sehr eingeschränkt zugelassenen Dammar Gum und BVO's (brominated vegetable oils) in den zugelassenen Konzentrationen Dichteerhöhungen erreicht, die stabile Getränketrübungen auf Emulsions basis ermöglichen, die mit denen in Limonaden und Fruchtsaftgetränken vergleichbar sind. Dichten der dispersen Phase, die für eine ausreichende Stabilisierung benötigt werden, liegen üblicherweise zwischen 0,96 bis 1,04 g/ml.

Dichten in auf Zucker basierenden Getränkesirupen liegen auf Grund der höheren Zuckerkonzentration mit 1,2 bis 1,31 deutlich höher als dies bei Endgetränken (RTD) oder vollständig bzw. weitgehend auf Süßstoffen basierenden Sirupen. Ein kompletter Dichteangleich der dispergierten Ölphase mit Beschwerungsmitteln ist in dem Fall nicht möglich, da die Dichte dieser Rohstoffe hierfür nicht ausreicht.

Dokument WO 02/43509 beschreibt Getränkeemulsionsstabilisatoren enthaltend coprozessierte modifizierte Stärke und Propylenglykolalginat. Beispiel 2d in WO 02/43509 beschreibt eine Vergleichsemulsion bestehend aus 79,26 Gew.-% Wasser, 0,1 Gew.% Natriumbenzoat, 10 Gew.-% modifizierter Stärke, 0.2 Gew.-% Zitronensäure, 0.44 Gew.-% gelbem Farbstoff und 10 Gew.-% Aromaöl (entsprechend 4,6 Gew.-% Estergum und 5.4 Gew.-% Orangenöl). Die mittlere Partikelgröße (D50) ist dort für Beispiel 2d mit 0,47 $\mu$m angegeben, was einem D90-Wert der Öl-Partikeldurchmesser von etwa 0,9 $\mu$m entspricht.

Dokument EP 1 787 533 offenbart allgemein Trübungsemulsionen zur Herstellung von Sirupen und Getränken, die 1 bis 30 Gew.-% Emulgator, 2 bis 24 Gew.-% Öl, 1 bis 32 Gew.% eines hydrophoben Trübungsmittels ausgewählt aus Sterolestern und/oder Stanolestern sowie optional bis zu 16 Gew.-% Beschwerungsmittel enthalten.

In EP 1 787 533 ist ausgeführt, dass in einer "fine emulsion" die mittlere Partikelgröße (D50) des hydrophoben Trübungsmittels, d.h. der Sterolester und/oder Stanolester vorzugsweise im Bereich von 0,5 bis 0,8 $\mu$m liegt. Die genannten Angaben der mittleren Partikelgröße und der bevorzugten Partikelgrößenverteilung im Bereich von 0,1 bis 2,0 $\mu$m beziehen sich in EP 1 787 533 auf die dort eingesetzten hydrophoben Trübungsmittel, nicht allgemein auf den Öl-Partikeldurchmesser der Ölphase der Emulsion.

Eine mittlere Partikelgröße (D50) von 0,5 $\mu$m entspricht einem D90-Wert von etwa 0,9 bis 1 $\mu$m. EP 1 787 533 offenbart damit keine Emulsion, in der das Ö in der Wasserphase dispergiert ist mit einem D90-Wert der Öl-Partikeldurchmesser von höchstens 0,5 $\mu$m und zumindest 0,3 $\mu$m.

EP 0 839 007 (entspricht US 5,616,358) beschreibt Emulsionen basierend auf modifizierter Stärke (einschließlich Stärkenatriumoctenylsuccinat = E 1450), die jedoch kein Beschwerungsmittel enthalten. Stabile Emulsionen sind gemäß EP 0 839 007 nur möglich, wenn ein Triglycerid mit hoher Dichte eingesetzt und gleichzeitig eine sehr kleine Partikelgröße eingestellt wird (D90 < 0,34 $\mu$m). Durch die sehr kleinen Partikel und wegen des geringen Unterschieds im Brechungsindex in Bezug auf die beschriebenen Sirupe mit 32 bzw 52 °Brix weisen diese Emulsionen eine sehr geringe Trübung auf, so dass die Emulsionen gemäß EP 0 839 007 wirtschaftlich nicht interessant sind. Ferner zeigte sich in eigenen Untersuchungen, dass z.B. Emulsion 5 der EP 0 839 007 nach wenigen Tagen nicht aufrahmstabil in Sirupen mit 32 bzw 52 °Brix war.

EP 1 151 677 beschreibt Emulsionsgetränke mit einer hohen spezifischen Trübung, wobei die Dichtedifferenz zwischen disperser (Öl) und kontinuierlicher Phase (Wasser) mit einem Bereich von 0,025 - 0,12 kg/l deutlich niedriger liegt. Emulsionen B, C und G der EP 1 151 677, die bezüglich der Dosage im Endgetränk der vorliegenden Erfindung am nächsten kommt (Ausmischvariante 2 bzw. 12 der EP 1 151 677), waren im Getränkesirup mit 52 °Brix bzw. 32 °Brix nicht aufrahmstabil und bildeten nach einigen Wochen einen Ölring.

Aufgabe der vorliegenden Erfindung war es, Emulsionen und aufrahmstabile Getränkesirupe sowie Verfahren zu deren Herstellung bereitzustellen, welche bei möglichst geringem Einsatz an nicht-wassermischbaren Flüssigkeiten eine möglichst aufrahmstabile Trübung sowohl in einem Getränkesirup mit unterschiedlich hohem Zuckergehalt (resultierend in einem hohen °Brix) als auch in dem daraus hergestellten Getränk erreicht werden kann.

Überraschenderweise wurde nun gefunden, dass es möglich ist, Emulsionen zu entwickeln, die eine hohe spezifische Trübung besitzen und sowohl in erfindungsgemäßen Getränkesirupen mit 30° - 62 °Brix, und im verzehrfertigen Getränk aufrahmstabil sind.

Erfindungsgemäß wird deshalb eine aufrahmstabile verzehrbare Emulsion bereitgestellt, umfassend:

| | |
|---|---|
| Wasser: | 75-85 Gew.-%, |
| modifizierte Stärke: | 8-14 Gew.-%, |
| Terpen-Öl: | 3-12 Gew-%, |
| Beschwerungsmittel: | 3-10 Gew.-%, |

jeweils bezogen auf die gesamte Emulsion, wobei das Öl inder Wasserphase dispergiert ist mit einem D90-Wert des Öl-Partikeldurchmesser von höchstens 0,5 $\mu$m und zumindest 0,3 $\mu$m.

Dabei ist eine modifizierte Stärke insbesondere ein Stärkederivat wie in der EP 0 839 001 beschrieben. In bevorzugten Ausführungsformen der Erfindung umfasst, besteht im wesentlichen oder besteht modifizierte Stärke aus Stärkenatriumoctenylsuccinat (E 1450). Ferner wird erfindungsgemäß unter einem Terpen-Öl eine nach dem Verständnis eines Lebensmittel-Praktikers nicht wasserlösliche terpenhaltige Flüssigkeit. Bevorzugt sind dabei erfindungsgemäße Emulsionen, deren Terpen-Öl Citrus-Terpene und/oder Aromaöle umfassen. Bevorzugte Terpen-Öle im Rahmen der vorliegenden Erfindung umfassen oder bestehen aus Orangen-, Zitronen- und/oder Grapefruitöl oder daraus erhältlichen Fraktionen, dabei bevorzugt Limonen (insbesondere d-Limonen) und/oder Orangenöl-Terpene.

Fette Öle und Fette pflanzlichen oder tierischen Ursprungs wie beispielsweise Triglyceride, dabei vorzugsweise geschmacksneutrale Trigylceride mit gleichen oder verschiedenen $C_6$ bis $C_{12}$ - Fettsäureresten (MCT, medium-chain trigylceride), können in geringen Mengen, vorzugsweise mit weniger als 20 Gew.-% bezogen auf das Terpen-Öl, Bestandteil des Terpen-Öls sein, sie reichen alleine jedoch regelmäßig nicht aus, um die gewünschte spezifische Trübung der erfindungsgemäßen Getränkesirupe zu erreichen. So kann im Rahmen der vorliegenden Erfindung beispielsweise das Beschwerungsmittel SAIB in der kommerziell erhältlichen Form als 80%ig in Triglyceriden eingesetzt werden, solange die erfindungsgemäßen Emulsionen und Getränkesirupe zusätzlich eine ausreichende Menge der oben genannten bevorzugten Öle, insbesondere Orangen-/Zitronen-/Grapefruitöl oder daraus erhältlichen Fraktionen wie oben beschrieben, enthält.

Vorzugsweise besitzt die erfindungsgemäße Emulsion eine spezifische Trübung von zumindest 500 NTU (nephelometric turbidity units). Dabei wird die spezifische Trübung gemessen nach Vorgabe der DIN ISO EN 27027 mit 90° IR-Streulicht, beispielsweise einem Hach 2100N IS Labortrübungsmessgerät mit 860 nm (Infrarot) LED.

Einige besonders bevorzugte Ausführungsformen der erfindungsgemäßen Emulsion sind nachfolgend aufgeführt:

| Komponente | Bereich Gew.-% | Bevorzugt Gew.-% |
|---|---|---|
| Wasser | 75 - 85 | 78 - 82 |
| Konservierungsmittel (bevorzugt Na- oder K-Sorbat, Na-benzoat) | optional | 0,05 - 0,15 |
| Genusssäure(n) (vorzugsweise Citronensäure) | optional, bevorzugt 0,2 - 0,8 | 0,4 - 0,7 |
| Modifizierte Stärke (bevorzugt E 1450) | 8 -14 | 8 -14 |
| Farbstoff | optional | 0,05 - 1,0 |
| Vitamine (A, B, C, D, E, K) | optional | 0,01 - 0,3 |
| Terpen-Öl | 3 - 12 | 4 - 8 |
| Beschwerungsmittel (bevorzugt Estergum, SAIB) | 3 - 10 | 4 - 6 |

Als Beschwerungsmittel werden vorzugsweise SAIB (E 444), Estergum (E 445), Dammar Gum und BVO's (brominated vegetable oils) oder Kombinationen davon eingesetzt.

Die Gesamtmenge an modifizierter Stärke in der erfindungsgemäßen Emulsion wird vorzugsweise in einem Gewichtsverhältnis von 0,8 : 1 bis 3 : 1 auf die disperse Phase eingesetzt. Bevorzugt liegt ein Gewichtsverhältnis von 1 : 1 bis 1,5 : 1 vor. Durch Einstellen dieser Gewichtsverhältnisse wird sowohl der erforderliche D90-Wert (siehe unten) erreicht und dieser Wert auch bei der Lagerung über einen langen Zeitraum (größer 6 Monate bei 20 °C) gehalten, wodurch nach Einarbeitung der erfindungsgemäßen Emulsion in einen erfindungsgemäßen Getränkesirup dieser über denselben Zeitraum aufrahmstabil bleibt.

Erfindungsgemäß wird ferner ein Getränkesirup angegeben, umfassend:

- an erfindungsgemäßer Emulsion: 0,5-3 Gew.-%,

- an Wasser: 35-70 Gew.-%

- an Zucker(n): 25-60 Gew.-%

- an Genusssäure(n): 0,5-4 Gew.-%

- an Konservierungsmittel(n):0,04-0,3 Gew.-%,

jeweils bezogen auf das Gesamtgewicht des Getränkesirups. Dabei verstehen sich die Gewichtsanteile an Wasser, Zucker(n), Genusssäure(n) und Konservierungsmittel(n) als zusätzlich zu den Bestandteilen der erfindungsgemäßen Emulsion. Der erfindungsgemäße Getränkesirup ist überraschenderweise sehr aufrahmstabil und weist eine hohe spezifische Trübung auf, dazu unten mehr. Mit Zucker ist dabei die Summe der Mono- und Disaccharide des Getränkesirups gemeint, insbesondere also ohne Berücksichtigung modifizierter Stärke.

Ein bevorzugter erfindungsgemäßer Getränkesirup umfasst, besteht im wesentlichen oder besteht aus:

| Komponente | Bereich Gew.-% | Bevorzugt Gew.-% |
|---|---|---|
| Erfindungsgemäße Emulsion | 0,5 - 3 | 0,5 - 3 |
| Wasser | 35 - 70 | 45 - 68 |
| Zucker (Summe aller Zucker, insbesondere Saccharose, Glucose und Fructose) | 25 - 60 | 30 - 52 |
| Süßstoffe (bevorzugt Acesulfam, Saccharin, Cyclamat, Aspartam, Sucralose) | optional, vorzugsweise 0,05 - 1,5 | 0,15 - 1,0, insbesondere bei Sirupen mit < 35 °Brix |
| Genusssäure(n) (bevorzugt Citronensäure) | 0,5 - 4 | 1 - 3 |
| Wasserlösliche Vitamine (bevorzugt B, C) | optional | 0,01 - 0,3 |
| Konservierungsmittel (bevorzugt Na- oder K-Sorbat, Na-benzoat) | 0,04 - 0,3 | 0,06 - 0,12 |

Die Aufrahmstabilität einer erfindungsgemäßen Emulsion und der erfindungsgemäßen Getränkesirupe mit hohem Trockensubstanzgehalt enthaltend eine erfindungsgemäße Emulsion wird insbesondere dadurch erreicht, dass im Zusammenspiel von Gehalt an disperser Ölphase im Getränkesirup, von Viskosität des Getränkesirups / Endgetränks und der Dichtedifferenz eine bestimmte Partikelgröße und Partikelverteilung in der Emulsion eingestellt wird.

Der mittlere volumen bezogene Partikeldurchmesser und die Partikelverteilung der Emulsion sind für die spezifische Trübung der Emulsion und für die Aufrahmstabilität des Getränkesirups entscheidend. Die Partikelgrößenverteilungen in der Emulsion, im Getränkesirup sowie im Endgetränk (RTD) sind im Wesentlichen gleich.

Der D90-Wert, der den Partikeldurchmesser in $\mu$m angibt, bei dem 90% der in der dispersen Ölphase enthaltenen Partikel kleinere Durchmesser besitzen, ist in den erfindungsgemäßen Emulsionen und Getränkesirupen kleiner als 0,50 $\mu$m, bevorzugt kleiner oder gleich 0,45 $\mu$m, besonders bevorzugt kleiner oder gleich 0,40 $\mu$m. Liegt der D90-Wert deutlich über 0,50 $\mu$m, so lassen sich keine aufrahmstabilen Getränkesirupe herstellen. Der D90-Wert sollte dabei größer oder gleich 0,30 $\mu$m sein, da die Trübungswerte im Einzelfall sonst auch unter 500 NTU liegen können. Daher beträgt der D90-Wert der erfindungsgemäßen Emulsionen und Getränkesirupe 0,30 bis 0,50 $\mu$m besonders 0,32 bis 0,45 $\mu$m, besonders bevorzugt 0,34 bis 0,45 $\mu$m.

Zwar ist in der EP 1 151 677 ein mittlerer volumenbezogener Partikeldurchmesser von über 0,4 $\mu$m als Obergrenze aufrahmstabiler Getränke aus Emulsionen genannt. Die genannte Obergrenze betrifft jedoch nur den mittleren Partikeldurchmesser (D50) im Unterschied zu dem erfindungsgemäß relevanten D90-Wert. In Vergleichsversuchen mit einer Emulsion gemäß EP 1 151 677 lag der D90-Wert oberhalb von 0,70 $\mu$m, siehe insoweit auch das Beispiel 4 unten.

Die erfindungsgemäßen Emulsionen wird insbesondere zur Trübung oder zur Trübung und Aromatisierung des erfindungsgemäßen Getränkesirups eingesetzt. Die Emulsion ist eine Öl-in-Wasser-Emulsion und besitzt bevorzugt eine Dichte in der dispersen Phase von 0,915 bis 1 g/ml, noch mehr bevorzugt zwischen 0,93 bis 0,98. Die Dichte der dispersen Phase wird durch eine entsprechende Wahl der Komponenten der Ölphase eingestellt.

In erfindungsgemäßen Getränkesirupen ist die Dichtedifferenz zwischen wässriger und Ölphase relativ groß, so beträgt auf Grund des hohen Zuckergehalts die Dichtedifferenz zwischen der dispersen Phase und der wässrigen Phase zumeist 0,12 bis 0,32 kg/l, vorzugsweise 0,14 bis 0,32 g/ml, wodurch an die erfindungsgemäßen Emulsionen besondere Anforderungen gestellt werden, damit die erfindungsgemäßen Getränkesirupen über einen langen Zeitraum aufrahmstabil bleiben.

Der erfindungsgemäße Getränkesirup besitzt dabei vorzugsweise eine spezifische Trübung von mehr als 500 NTU (Nephelometric Turbidity Units). Bevorzugt beträgt die spezifische Trübung 500 - 1200 NTU, bevorzugt 600 - 1000 NTU.

Der erfindungsgemäße Getränkesirup enthält gegebenenfalls zusätzlich einen oder mehrere der folgenden üblichen Zusätze, wie Fruchtbestandteile, im Lebensmittelbereich zugelassene anorganische Säuren, Antioxidantien, Süßungsmittel, Aromen, Farbstoffe, Verdickungsmittel, sogenannte "funktionelle" Zutaten und Konservierungsstoffe.

Als Fruchtbestandteile werden hier vor allem Fruchtaromen, Fruchtsäfte, Fruchtpürees und Fruchtsaftkonzentrate verstanden. Fruchtsäfte bzw. Fruchtsaftkonzentrate, die verwendet werden können, sind solche auf Basis von Zitrusfrüchten, beispielsweise Orange, Zitrone, Grapefruit und Mandarine, und anderen Früchten, beispielsweise Apfel, Birne, Traube, Aprikose und Ananas. Weiterhin können Fruchtsäfte und Fruchtsaftkonzentrate aus Beerenobst, wie Brombeere, Stachelbeere, Johannisbeere, Heidelbeere, Erdbeere und Himbeere verwendet werden. Weiterhin können Fruchtsäfte und Fruchtsaftkonzentrate aus exotischen Früchten, wie beispielsweise Guave, Papaya, Maracuja, Mango und Banane verwendet werden.

Erfindungsgemäß können die Getränkesirupe bis zu 80 Gew.-% der bezeichneten Fruchtbestandteile enthalten. Bevorzugt werden Fruchtsaftkonzentrate eingesetzt, welche vorzugsweise 50° - 72 °Brix aufweisen, regelmäßig werden Fruchtsaftkonzentrate mit etwa 65 °Brix eingesetzt. Bevorzugt sind Fruchtsaftkonzentrate von Orange, Zitrone, Apfel, Birne und Traube.

Weiterhin kann der Getränkesirup Süßungsmittel enthalten. Üblicherweise werden Zucker, Süßstoffe, Zuckeraustauschstoffe und Süßungsmittelzusammensetzungen, sowie Mischungen daraus eingesetzt.

Geeignete Zucker sind insbesondere Saccharose, Fructose und Glucose, sowie Mischungen davon. Solche Mischungen sind kommerziell z.B. als Invertzuckersirup oder High Fructose Corn Syrup mit einem Trockensubstanzgehalt von in der Regel 65 - 72 °Brix verfügbar.

Geeignete Süßstoffe sind Acesulfam-K, Aspartam, Cyclamat (sowie dessen Na-und Ca-Salze), Neohesperidindihydrochalcon, Sucralose und Saccharin (sowie dessen Na-, K- und Ca-Salze). Pflanzliche Süßstoffe können ebenfalls verwendet werden, wie beispielsweise Glycyrrhicin und Thaumatin. Besonders bevorzugt sind Acesulfam-K, Aspartam, Cyclamat, Na- Cyclamat, Saccharin, Na-Saccharin und Sucralose.

Geeignete Zuckeraustauschstoffe sind Zuckeralkohole wie Isomatitol (E 953), Lactitol (E 966), Maltitol, Manitol (E 421), Sorbitol (E 420), Xylitol (E 967) sowie Gemische daraus. Weiterhin können als Süßungsmittel Mischungen aus synthetischem Süßstoff und entaromatisierten oder nicht entaromatisierten konzentrierten Fruchtzubereitungen verwendet werden.

Die Süßungsmittel werden dem erfindungsgemäßen Getränkesirup in einer solchen Menge zugegeben, dass die erhaltene Süßkraft einem Zusatz bis zu 250 g/l Saccharose entspricht. Bevorzugt werden 180 bis 220 g/l Saccharose.

Eine erfindungsgemäße Emulsion enthält eine oder mehrere Genusssäuren. Bevorzugte Genusssäuren sind Citronensäure, Weinsäure, Milchsäure, Phosphorsäure und Äpfelsäure. Der pH-Wert der erfindungsgemäßen Emulsionen beträgt vorzugsweise 3 - 4, weiter bevorzugt 3,3 - 3,5.

Der erfindungsgemäße Getränkesirup enthält ebenfalls eine oder mehrere Genusssäuren, vorzugsweise Citronensäure, Weinsäure, Milchsäure, Phosphorsäure und Äpfelsäure. Erfindungsgemäßen Getränkesirupe weisen vorzugsweise einen pH-Wert von kleiner 2,2 besonders bevorzugt einen pH-Wert von 1,5 bis 1,9 auf.

Weiterhin kann der erfindungsgemäße Getränkesirup Hydrokolloide als Verdickungsmittel enthalten. Geeignete Verdickungsmittel sind Carboxymethylcellulose, Xanthan, Johannisbrotkernmehl, Gellan, Guarkemmehl, Carragen, Alginsäure, Alginate, Pektin sowie Mischungen daraus. Werden Verdickungsmittel angewendet, so liegt der Gehalt an genannten Verdickungsmitteln im Getränkesirup dabei zwischen 0,0025 bis 1 Gew.-%. Bevorzugt im Rahmen der vorliegenden Erfindung sind Emulsionen und Getränkesirupe ohne Zusatz von Verdickungsmitteln, d.h. (im Wesentlichen) frei von Hydrokolloiden, wobei nicht verdickend wirksame Menge von Pektin in Einzelfällen in Spuren in den erfindungsgemäßen Getränkesirupen vorhanden sein können, sofern diese ein Fruchtsaftkonzentrat enthalten.

Der erfindungsgemäße Getränkesirup kann weiterhin sogenannte "funktionelle" Zutaten enthalten, wie beispielsweise Vitamine (A, B, C, D, E, K), Mineralstoffe, Kräuterextrakte, Ballaststoffe, prebiotische Zutaten, Aminosäuren, Taurin und/oder Coffein.

Es kann mit Lebensmittelfarbstoffen und/oder färbenden Lebensmittel eingefärbt werden. Erfindungsgemäß kann der Getränkesirup im Lebensmittelbereich zugelassene Konservierungsstoffe enthalten. Geeignete Konservierungsstoffe sind beispielsweise, Sorbinsäure, Benzoesäure und deren Alkalisalze.

Das Konservierungsmittel wird üblicherweise in einer Konzentration von 0,04 bis 0,3 Gew.-% im Getränkesirup angewendet.

Der erfindungsgemäße Getränkesirup kann geeignete natürliche und synthetische Antioxidantien besitzen. Geeignete natürliche Antioxidantien sind beispielsweise Tocopherole, L-Ascorbinsäure, ihre Fettsäureester, wie L-Ascorbylpalmitat, Gallussäureester und Flavonoide. Geeignete synthetische Antioxidantien sind beispielsweise tert.-Butylhydroxyanisol und tert.-Butylhydrochinon.

Erfindungsgemäße Emulsionen mit der oben genannten Partikelverteilung lassen sich mit jeder bekannten, geeigneten Methode, wie der Hochdruckhomogenisation, Mikrofluidisation oder Emulgierung über Membranen herstellen.

Wird ein Hochdruckhomogenisator verwendet, so wird ein zweistufiger Homogenisator bevorzugt; bei dem ein definiertes Druckniveau im Auslauf der Homogenisationsventils eingestellt werden kann. Der verwendete Hauptdruck, das heisst der Druck am Einlauf in das Homogenisationsventil, liegt bei der Herstellung der hier beanspruchten Emulsion zwischen 100 bis 500 bar, vorzugsweise zwischen 160 bis 300 bar. Das Druckniveau im Auslauf wird auf 1/3 bis 1/15 des Hauptdruckes eingestellt, vorzugsweise auf 1/5 bis 1/10.

Die erfindungsgemäßen Emulsionen werden vorzugsweise in 2 bis 6, bevorzugt in 3 bis 4 Durchgängen homogenisiert. Die Temperatur bei der Homogenisation liegt unter 90° C, vorzugsweise unter 40° C.

Zur Herstellung des erfindungsgemäßen Getränkesirupe können die konventionell verwendeten Technologien zur Herstellung des fertigen Getränkes verwendet werden. Die Methoden, die zur Herstellung von Getränkesirupen dienen, wird z.B. im Handbuch: Erfrischungsgetränke der Südzucker AG, Mannheim/Ochsenfurt (1998) beschrieben.

Üblicherweise wird bei der Herstellung von safthaltigen Getränkesirupen ein Grundstoff verwendet, der im vorliegenden Fall auch die beanspruchte Emulsion enthalten kann. Er enthält normalerweise alle für den Getränkesirup wichtigen Bestandteile außer Wasser und gegebenenfalls Zucker und/oder Süßungsmittel.

Enthält der Getränkesirup keine Saftanteile oder Zusätze wie Extrakte oder Mineralstoffe, kann der Endhersteller ebenfalls die beanspruchte Emulsion einsetzen, die, je nach Zusammensetzung, die gewünschte Trübung, Farbe sowie den Geschmack des Getränkesirups liefert. Denkbar ist natürlich auch die Herstellung des kompletten Getränkesirups.

Die Viskosität der erfindungsgemäßen Getränkesirup liegt vorzugsweise, je nach Zusammensetzung und °Brix, im Bereich von 0,004 - 3 Pas, bevorzugt 0,005 - 2 Pas, und kann gegebenenfalls durch bekannte Verdickungsmittel wie oben beschrieben eingestellt werden.

Als Messsystem diente ein Kegel-Platte-System mit einem Durchmesser von 50 mm und einem Kegelwinkel von 2°. Die Schubspannung betrug 1 s$^{-1}$. Die Temperatur lag bei 20° C. Die Viskosität kann z.B. mit dem Rheometer Anton Paar Physica UDS 200 bestimmt werden.

Der erfindungsgemäße Getränkesirup ist für mindestens 6 Monate aufrahmstabil. Aufrahmstabil bedeutet hierbei, dass im Flaschenhals ein Ring mit einer maximalen Ringdicke von 0,5 mm entsteht. Dabei erfolgt die Lagerung bei einer konstanten Temperatur von 20 +/- 1,5° C.

Anders als die im Rahmen der vorliegenden Erfindung eingesetzten modifizierten Stärken ist Gummi arabicum, insbesondere in Emulsionen und Getränkesirupen mit niedrigen pH-Werten, regelmäßig nicht aufrahmstabil. Dies ist insoweit von Relevanz, als die erfindungsgemäßen Getränkesirupe regelmäßig einen pH-Wert von kleiner als 2,2 aufweisen, häufig einen pH-Wert von etwa 1,7. Die daraus hergestellten Endgetränk (RTD) weisen regelmäßig einen pH-Wert von kleiner als 3 auf, häufig einen pH-Wert von etwa 2,8. Daher sind eine erfindungsgemäße Emulsion und ein erfindungsgemäßer Getränkesirup in einer bevorzugten Ausführungsform im Wesentlichen frei von Gummi arabicum, sie enthalten dann höchstens 0,01 Gew.-% Gummi arabicum, besonders bevorzugt weniger als 0,001 Gew.-%, jeweils bezogen auf die gesamte Emulsion bzw. den gesamten Getränkesirup.

Die nachfolgenden Beispiele erläutern die Erfindung. Sofern nicht anders angegeben, beziehen sich alle Angaben auf das Gewicht.

Methode zur Bestimmung der Partikelverteilung der Emulsion

Der mittlere Partikeldurchmesser und die Partikelverteilung wird mit dem Mastersizer 2000 der Firma Malvern Instruments Ltd. bestimmt.

Zur Bestimmung wird die Probe der Emulsion in der Messanordnung auf eine Abschattung von 10 bis 20% eingestellt und gemessen. Als Messzelle wird die Zelle Hydro 2000 MU verwendet. Die Pumpenintensität beträgt 2200 bis 2500. Zur Berechnung wird das allgemeine Modell verwendet, wobei als optische Konstanten der Refraktionsindex der dispersen Phase mit 1,45 (Emulsionstropfen) und der Refraktionsindex der kontinuierlichen Phase mit 1,330 (Wasser) festgelegt werden.

Die Absorption der Probe wird mit 0,01 festgelegt.

Methode zur Bestimmung der spezifischen Trübung der Emulsion

Die jeweiligen Proben werden je nach Konzentration im Getränkesirup mit 52 °Brix angesetzt und gemessen. Gleiches gilt für die Messung der Trübung im Endgetränk, wobei der entsprechende Getränkesirup gemäß der Verdünnungsvorgabe, z.B. 1+5 (ein Teil Getränkesirup wird mit 5 Teilen Wasser verdünnt und ergibt auf diese Weise das Endgetränk (RTD)), dosiert wird.

Die Trübung wurde bestimmt im nephleometrischen Messverfahren mit dem Labortrübungsmessgerät 2100 N IS der Firma Hach.

Die Messeinheit der jeweiligen Trübung ist NTU (Nephelometric Turbidity Units).

Ermittlung der Viskosität η über die Fließ- und Viskositätskurve

Gerät:          Anton Paar Physica UDS 200 Messsystem CP 2° / 50 mm

Temperatur:   20 °C Schergeschwindigkeit: von 100 bis 2000 s$^{-1}$

Emulsionsherstellung und Sirupausmischung (Sirupherstellung)

Die Herstellung der Emulsionen erfolgt, indem gegebenenfalls Vitamine, Farbstoffe und Konservierungsmittel in dem Wasser gelöst und dispergiert werden. Abschließend wird gegebenenfalls das optionale Säuerungsmittel zugegeben.

Parallel wird die Ölphase hergestellt, in dem die entsprechenden Citrusöle/Pflanzenöle gemischt werden. In Anschluss werden gegebenenfalls das Beschwerungsmittel (bevorzugt Estergum, Damar Gum oder SAIB) sowie gegebenenfalls Antoxidantien wie BHA oder Tocopherol unter Erwärmung in der Ölphase gelöst.

Die Ölphase wird danach durch einen Rührer, beispielsweise Rotor-Stator-System, mit einer entsprechenden Umdrehungszahl voremulgiert. Danach erfolgt eine Hochdruckhomogenisation wie vorhergehend beschrieben.

Unter Verwendung der in Tabelle 1 angegebenen Emulsionsrezepturen wird die Emulsion hergestellt und entsprechend der Tabelle 2 und 3 zum finalen verkaufsfähigen Getränkesirup ausgemischt.

Die Herstellung des Getränkesirup erfolgt vorzugsweise, indem gegebenenfalls Vitamine, Süßstoffe und Konservierungsmittel im Wasser unter permanent laufendem Rührwerk (Rotor-Stator-System) gelöst werden. Danach erfolgt die Zugabe der Säuerungsmittel und der Emulsion. Abschließend werden gegebenenfalls Fruchtsaftkonzentrate sowie Zuckersirup hinzugegeben.

Der Getränkesirup ist - je nach Rezeptur bzw. Anforderung - auf eine definierte Konzentration eingestellt. Dies ist insbesondere für die Dosage der Emulsionen wichtig, da diese durch die Gesetzgebung limitierte Beschwerungsmittel enthalten, deren maximale Konzentration im ausgemischten Endgetränk nicht überschritten werden dürfen. Gängige Konzentrationen sind beispielsweise 1 : 5, 1: 9 oder 1 : 23, d.h. ein Teil Getränkesirup wird mit 5, 9 bzw. 23 Teilen Wasser verdünnt und ergibt auf diese Weise das Endgetränk (RTD).

Die Emulsion besitzt nach der Emulsionsherstellung hinsichtlich des D90-Wertes, der Aufrahmstabilität, und der Trübung die in Tabelle 3 genannten Eigenschaften.

Beispielhafte Zusammensetzungen der Emulsionen werden in Tabelle 1 dargestellt.

Tabelle 1: Erfindungsgemäße Emulsionsrezepturen

| Emulsion | A (Gew.-%) | B (Gew.-%) | C (Gew.-%) | D (Gew.-%) |
|---|---|---|---|---|
| Wasser | 77,93 | 77,32 | 74,6 | 78,58 |
| Konservierungsmittel | 0,10 | 0,10 | 0,10 | 0,10 |
| Säuerungsmittel (Citronensäure) | 0,60 | 0,60 | 0,60 | 0,60 |
| Modifizierte Stärke (E 1450) | 12,0 | 12,0 | 12,0 | 12,0 |
| Farbstoff | 0,37 | 0,58 | 0,5 | 0,62 |
| Vitamine (A, C, D, E, K) | - | - | 0,2 | 0,1 |
| Öl (Limonen) | 4,0 | 6,0 | 7,0 | 4,0 |
| Beschwerungsmittel (bevorzugt Estergum, SAIB) | 5,0 | 5,0 | 5,0 | 4,0 |
| Gesamt | 100 | 100 | 100 | 100 |
| D90-Wert | 0,41 | 0,48 | 0,39 | 0,45 |

Tabelle 2: Erfindungsgemäße Getränkesirupe

| Komponente | I (Gew.-%) | II (Gew.-%) | III (Gew.-%) | IV (Gew.-%) |
|---|---|---|---|---|
| Emulsion gemäß Tabelle 1 | A | B | C | D |
| Menge an Emulsion gemäß Tabelle 1 | 1,00 | 1,00 | 1,20 | 1,20 |
| Apfel- oder TraubenFruchtsaftkonzentrat (65 °Brix) | - | - | 10,40 | 10,40 |
| Süßstoffe | - | 0,55 | - | 0,73 |
| 65 °Brix Invertzuckersirup | 77,80 | 47,00 | 67,41 | 36,61 |
| Säuerungsmittel (CitronensäureMonohydrat) | 2,00 | 2,00 | 2,00 | 2,00 |
| Vitamine (B, C) | 0,10 | 0,10 | 0,10 | 0,10 |

(fortgesetzt)

| Komponente | I (Gew.-%) | II (Gew.-%) | III (Gew.-%) | IV (Gew.-%) |
|---|---|---|---|---|
| Konservierungsmittel | 0,10 | 0,12 | 0,09 | 0,11 |
| Wasser | 19,00 | 49,23 | 18,80 | 48,85 |
| Gesamt | 100 | 100 | 100 | 100 |
| °Brix Getränkesirup | 52 | 32 | 52 | 32 |
| Viskosität (in Pas) | 0,0197 | 0,0068 | 0,0197 | 0,0068 |
| D90-Wert | 0,41 | 0,48 | 0,39 | 0,45 |

Als Süßstoffe enthielten die Getränkesirupe II und IV eine Mischung aus Acesulfam-K, Na-Saccharin und Aspartam im Gewichtsverhältnis 1 : 5 : 1.

Als Konservierungsmittel wurde in den Getränkesirupen I und III Na-sorbat und in den Getränkesirupen II und IV eine Mischung von Na-sorbat und Na-benzoat im Gewichtsverhältnis 1 : 1 eingesetzt.

Tabelle 3: Eigenschaften und Stabilitätsbetrachtung erfindungsgemäßer Getränkesirupe mit 32 bzw. 52 °Brix

| Getränkesirup | I | | II | | III | | IV | |
|---|---|---|---|---|---|---|---|---|
| Getränkesirup °Brix | 52 | 32 | 52 | 32 | 52 | 32 | 52 | 32 |
| Öldichte [kg/l] | 0,97 | 0,97 | 0,97 | 0,97 | 0,96 | 0,96 | 0,96 | 0,96 |
| Dichtedifferenz Sirup [kg/l] | 0,27 | 0,17 | 0,27 | 0,17 | 0,28 | 0,18 | 0,28 | 0,18 |
| Dichtedifferenz RTD [kg/l] | 0,07 | 0,04 | 0,07 | 0,04 | 0,08 | 0,05 | 0,08 | 0,05 |
| Ölgehalt im Sirup [g/kg] | 0,90 | 0,90 | 1,32 | 1,32 | 1,2 | 1,2 | 0,96 | 0,96 |
| Ölgehalt im RTD [g/kg] | 0,18 | 0,18 | 0,26 | 0,26 | 0,2 | 0,2 | 0,16 | 0,16 |
| D90-Wert | 0,41 | 0,41 | 0,48 | 0,48 | 0,39 | 0,39 | 0,45 | 0,45 |
| Trübung NTU Sirup | 605 | 780 | 912 | 762 | 809 | 1108 | 735 | 770 |
| Trübung NTU RTD (Verdünnung 1+5) | 286 | 321 | 515 | 585 | 448 | 501 | 350 | 381 |
| 6 Monate stabil bei 20 °C | Ja | Ja | Ja | Ja | Ja | Ja | Ja | Ja |

Tabelle 4: Nicht aufrahmstabile Getränkesirupe auf Basis von nicht erfindungsgemäßen Emulsionen

| Emulsion | EP 1 151 677 Emulsion B | | EP 0 839 007 Emulsion 5 | |
|---|---|---|---|---|
| Dosage [kg/1000 kg] | 10 | 10 | 10 | 10 |
| Getränkesirup °Brix | 52 | 32 | 52 | 32 |
| Öldichte [kg/l] | 0,95 | 0,95 | 0,95 | 0,95 |
| Dichtedifferenz Sirup [kg/l] | 0,29 | 0,19 | 0,29 | 0,19 |
| Dichtedifferenz RTD [kg/l] | 0,09 | 0,06 | 0,09 | 0,06 |
| Ölgehalt im Sirup [g/kg] | 1,30 | 1,30 | 0,71 | 0,71 |
| Ölgehalt im RTD [g/kg] | 0,26 | 0,26 | 0,14 | 0,14 |
| D90-Wert | 0,72 | 0,72 | 0,25 | 0,25 |
| Trübung NTU Sirup | 268 | 898 | 85 | 338 |

(fortgesetzt)

| Emulsion | EP 1 151 677 Emulsion B | | EP 0 839 007 Emulsion 5 | |
|---|---|---|---|---|
| Trübung NTU RTD (Verdünnung 1+5) | 337 | 386 | 161 | 180 |
| 6 Monate stabil bei 20 °C | Nein | Nein | Nein | Nein |

**Patentansprüche**

1. Aufrahmstabile verzehrbare Emulsion, umfassend:

   - Wasser: 75-85 Gew.%,
   - modifizierte Stärke: 8-14 Gew.-%,
   - Terpen-Öl: 3-12 Gew.-%,
   - Beschwerungsmittel: 3-10 Gew.%,

   jeweils bezogen auf die gesamte Emulsion,
   wobei das Öl in der Wasserphase dispergiert ist mit einem D90-Wert der Öl-Partikeldurchmesser von höchstens 0,5 $\mu$m und zumindest 0,3 $\mu$m.

2. Emulsion nach Anspruch 1. **dadurch gekennzeichnet, dass** die Dichte des Öls 0,915 bis 1 g/l beträgt.

3. Emulsion nach einem der vorherigen Ansprüche, **dadurch gekennzeichnet, dass** die modifizierte Stärke umfasst, im wesentlichen besteht oder besteht aus Stärkenatriumoctenylsuccinat (E 1450).

4. Emulsion nach einem der vorherigen Ansprüche, **dadurch gekennzeichnet, dass** das Beschwerungsmittel ausgewählt ist aus der Gruppe bestehend aus Saccharoseacetat-Isobutyrat (SAIB, E 444), Estergum (E 445), Dammar Gum, bromiertem Pflanzenöl und Mischungen zweier oder mehrerer dieser Substanzen.

5. Emulsion nach einem der vorherigen Ansprüche, **dadurch gekennzeichnet, dass** das Terpen-Öl Limonen umfasst und/oder ausgewählt ist aus der Gruppe bestehend aus Orangenöl, Zitronenöl, Grapefruitöl und Mischungen zweier oder mehrerer dieser Substanzen.

6. Emulsion nach einem der vorherigen Ansprüche, ferner enthaltend ein oder mehrere Genusssäuren mit einem Gesamt-Gehalt von 0,2-0,8 Gew.-% bezogen auf die gesamte Emulsion.

7. Emulsion nach einem der vorherigen Ansprüche, **dadurch gekennzeichnet, dass** der pH-Wert der Emulsion 3-4 beträgt.

8. Getränkesirup, umfassend jeweils insgesamt

   - an Emulsion nach einem der Ansprüche 1 bis 7:0,5-3 Gew.-%,
   - an Wasser: 35-70 Gew.%
   - an Zucker(n): 25-60 Gew.-%
   - an Genusssäure(n): 0,5-4 Gew.-%
   - an Konservierungsmittel(n): 0,04-0,3 Gew.-%, jeweils bezogen auf den gesamten Getränkesirup.

9. Getränkesirup nach Anspruch 8, **dadurch gekennzeichnet, dass** der Getränkesirup eine spezifische Trübung von mehr als 500 NTU (Nephelometric Turbidity Units) aufweist.

10. Getränkesirup nach einem der Ansprüche 8 bis 9, **dadurch gekennzeichnet, dass** die Dichtedifferenz zwischen dem Öl der Emulsion und der Wasserphase des Getränkesirups 0,14-0.32 g/ml beträgt.

11. Getränkesirup nach einem der Ansprüche 8 bis 10, **dadurch gekennzeichnet, dass** der pH-Wert des Getränkesirups weniger als 2,2 beträgt.

12. Getränkesirup nach einem der Ansprüche 8 bis 11, **dadurch gekennzeichnet, dass** der Getränkesirup höchstens 0.01 Gew.-% Gummi arabicum enthält.

13. Getränkesirup nach einem der Ansprüche 8 bis 12, mit 30 - 62 °Brix.

14. Trinkfertiges Getränk, umfassend einen Getränkesirup nach einem der Ansprüche 8 bis 13 und ein verzehrbares Verdünnungsmittel.

15. Verfahren zum Herstellen einer Emulsion nach einem der Ansprüche 1 bis 7, umfassend das Zusammengeben der Emulsionsbestandteile und Hochdruckhomogenisieren mit einem Hauptdruck von 100-500 bar und einem Auslauf-Druck von 1/15 bis 1/3 des Hauptdruckes.


**Claims**

1. Creaming-resistant consumable emulsion, comprising:

    - water: 75-85 wt.%
    - modified starch: 8-14 wt.%
    - terpene oil: 3-12 wt.%
    - weighting agent: 3-10 wt.%

    in each case relative to the total emulsion,
    the oil being dispersed in the aqueous phase having a D90 value of the oil particle diameters of at most 0.5 $\mu$m and at least 0.3 $\mu$m.

2. Emulsion according to Claim 1, **characterised in that** the density of the oil is 0.915 to 1 g/l.

3. Emulsion according to any one of the preceding claims, **characterised in that** the modified starch comprises, substantially is or consists of starch sodium octenyl succinate (E1450).

4. Emulsion according to any one of the preceding claims, **characterised in that** the weighting agent is selected from the group consisting of sucrose acetate isobutyrate (SAIB, E 444), ester gum (E 445), dammar gum, brominated vegetable oil and mixtures of two or a plurality of these substances.

5. Emulsion according to any one of the preceding claims, **characterised in that** the terpene oil comprises limonene and/or is selected from the group consisting of orange oil, lemon oil, grapefruit oil and mixtures of two or a plurality of these substances.

6. Emulsion according to any one of the preceding claims, further containing one or a plurality of acidulants with a total content of 0.2-0.8 wt.% relative to the total emulsion.

7. Emulsion according to any one of the preceding claims, **characterised in that** the pH value of the emulsion is 3-4.

8. Beverage syrup, comprising in each case in total

    - emulsion according to any one of Claims 1 to 7: 0.5-3 wt.%
    - water: 35-70 wt.%
    - sugar(s): 25-60 wt.%
    - acidulant(s): 0.5-4 wt.%
    - preservative(s): 0.04-0.3 wt.%, in each case relative to the total beverage syrup.

9. Beverage syrup according to Claim 8, **characterised in that** the beverage syrup has a specific turbidity of more than 500 NTU (Nephelometric Turbidity Units).

10. Beverage syrup according to any one of Claims 8 to 9, **characterised in that** the density difference between the oil of the emulsion and the aqueous phase of the beverage syrup is 0.14-0.32 g/ml.

11. Beverage syrup according to any one of Claims 8 to 10, **characterised in that** the pH value of the beverage syrup is less than 2.2.

12. Beverage syrup according to any one of Claims 8 to 11, **characterised in that** the beverage syrup contains max 0.01 wt.% of gum arabic.

13. Beverage syrup according to any one of Claims 8 to 12, having 30 - 62 °Brix.

14. Ready-to-drink beverage, comprising a beverage syrup according to any one of Claims 8 to 13 and a consumable diluting agent.

15. Method for producing an emulsion according to any one of Claims 1 to 7, comprising the combining of the emulsion constituents and high-pressure homogenising at a main pressure of 100-500 bar and at a level-off pressure of 1/15 to 1/3 of the main pressure.

**Revendications**

1. Emulsion comestible stable au crémage, comprenant :

   - de l'eau : 75 à 85 % en masse,
   - de l'amidon modifié : 8 à 14 % en masse,
   - de l'huile de terpène : 3 12 % en masse,
   - une charge pigmentaire: 3 à 10 % en masse,

   respectivement par rapport l'émulsion totale,
   dans laquelle l'huile est dispersée dans la phase aqueuse avec une valeur D90 du diamètre des particules d'huile au plus de 0,5 $\mu$m et au moins de 0,3 $\mu$m.

2. Emulsion selon la revendication 1, **caractérisée en ce que** la densité de l'huile est entre 0, 915 et 1 g/l.

3. Emulsion selon l'une des revendications précédentes, **caractérisée en ce que** l'amidon modifié comprend, est constitué essentiellement de ou consiste en octényisuccinate de sodium d'amidon (E 1450).

4. Emulsion selon l'une des revendications précédentes, **caractérisée en ce que** la charge pigmentaire est choisie dans le groupe comprenant l'isobutyrate de saccharose acétate (SAIB, E 444), une gomme d'ester (E 445), une gomme dammar, une huile végétale bromée et des mélanges de deux ou de plusieurs de ces substances.

5. Emulsion selon l'une des revendications précédentes, **caractérisée en ce que** l'huile de terpène comprend du limonène et/ou est choisie dans le groupe comprenant de l'huile d'orange, de l'huile de citron, de l'huile de pamplemousse et des mélanges de deux ou de plusieurs de ces substances.

6. Emulsion selon l'une des revendications précédentes, contenant en outre un ou plusieurs acides comestibles présentant une teneur totale de 0,2 à 0,8 % en masse par rapport à l'émulsion totale.

7. Emulsion selon l'une des revendications précédentes, **caractérisée en ce que** le pH de l'émulsion est entre 3 et 4.

8. Sirop à boire, comprenant respectivement au total

   - une émulsion selon l'une des revendications 1 à 7 : 0,5 à 3 % en masse,
   - de l'eau : 35 à 70 % en masse,
   - un/des sucre(s) : 25 à 60 % en masse
   - un/des acide(s) comestible(s) : 0,5 à 4 % en masse,
   - un/des conservateur(s) : 0,04 à 0,3 % en masse respectivement par rapport au sirop à boire total.

9. Sirop à boire selon la revendication 8, **caractérisé en ce que** le sirop à boire présente une turbidité spécifique de plus de 500 UTN (unités de turbidité néphélométrique).

10. Sirop à boire selon l'une des revendications 8 à 9, **caractérisé en ce que** la différence de densité entre l'huile de l'émulsion et la phase aqueuse du sirop à boire est de 0,14 à 0,32 g/ml.

11. Sirop à boire selon l'une des revendications 8 à 10, **caractérisé en ce que** le pH du sirop à boire est inférieur à 2,2.

12. Sirop à boire selon l'une des revendications 8 à 11, **caractérisé en ce que** le sirop à boire contient au plus 0,01 % en masse de gomme arabique.

13. Sirop à boire selon l'une des revendications 8 à 12, présentant 30 à 62° Brix.

14. Boisson prête à boire, comprenant un sirop à boire selon l'une des revendications 8 à 13 et un diluant consommable.

15. Procédé de production d'une émulsion selon l'une des revendications 1 à 7, comprenant le mélange des composants de l'émulsion et une homogénéisation à haute pression avec une pression principale de 100 à 500 bars et une pression de sortie de 1/15 à 1/3 de la pression principale.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0243509 A
- EP 1787533 A
- EP 0839007 A
- US 5616358 A
- EP 1151677 A
- EP 0839001 A

**In der Beschreibung aufgeführte Nicht-Patentliteratur**

- Handbuch: Erfrischungsgetränke der Südzucker AG. 1998